(19) Europäisches Patentamt / European Patent Office / Office européen des brevets

(11) **EP 3 799 338 A1**

(12) **EUROPEAN PATENT APPLICATION**
published in accordance with Art. 153(4) EPC

(43) Date of publication:
**31.03.2021 Bulletin 2021/13**

(21) Application number: **18924266.2**

(22) Date of filing: **27.06.2018**

(51) Int Cl.:
*H04L 1/06* (2006.01)　　*H04B 7/04* (2017.01)

(86) International application number:
**PCT/CN2018/093177**

(87) International publication number:
**WO 2020/000273 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **HUAWEI TECHNOLOGIES CO., LTD.**
**Shenzhen, Guangdong 518129 (CN)**

(72) Inventors:
• **QIN, Mingfu**
  **Shenzhen, Guangdong 518129 (CN)**
• **WANG, Libiao**
  **Shenzhen, Guangdong 518129 (CN)**
• **LUO, Jiangli**
  **Shenzhen, Guangdong 518129 (CN)**
• **CHEN, Siyan**
  **Shenzhen, Guangdong 518129 (CN)**

(74) Representative: **Pfenning, Meinig & Partner mbB**
**Patent- und Rechtsanwälte**
**Joachimsthaler Straße 10-12**
**10719 Berlin (DE)**

(54) **DATA TRANSMISSION METHOD AND APPARATUS**

(57) A data transmission method and a data transmission apparatus are provided. The method includes: receiving, by a first access network device, a precoding matrix index PMI from a terminal device; determining, by the first access network device, a weighted precoding matrix based on the PMI and a preset matrix; precoding, by the first access network device, downlink data of the terminal device based on the weighted precoding matrix, to obtain the precoded downlink data, where the weighted precoding matrix is a 4x2 matrix, and values of the last two elements in a first column and the first two elements in a second column of the weighted precoding matrix are all 0s; and sending, by the first access network device, the precoded downlink data to the terminal device.

FIG. 2

## Description

## ECHNICAL FIELD

This application relates to the field of wireless communications technologies, and in particular, to a data transmission method and apparatus.

## BACKGROUND

The International Telecommunication Union (ITU) proposed high requirements for performance of a next-generation mobile communications system. For example, a maximum system transmission bandwidth should reach 100 MHz, and a peak uplink data transmission rate and a peak downlink data transmission rate should reach 1G bit/s and 500M bit/s respectively. In addition, high requirements are also proposed for average spectral efficiency of a system, especially for edge spectral efficiency. To meet the requirements for the new system, the 3rd Generation Partnership Project (3rd Generation Partnership Project, 3GPP) proposed a coordinated multipoint transmission (Coordinated Multiple Points, CoMP) in a next-generation mobile cellular communications system, that is, a long term evolution advanced (Long Term Evolution Advanced, LTE-Advanced) system, to improve system performance. The coordinated multipoint transmission technology is a technology in which geographically separated transmission points cooperatively transmit data to a terminal device. Generally, the transmission points are base stations serving different cells.

In the coordinated multipoint transmission technology, a cell used to transmit data for the terminal device jointly with a cell in which the terminal device is located is usually referred to as a coordinating cell, a base station corresponding to the coordinating cell is referred to as a cooperative base station, and a base station corresponding to the cell in which the terminal device is located is referred to as a serving base station. In conventional technologies, when a serving base station works with a cooperative base station to transmit data to a terminal device, the serving base station and the cooperative base station separately send the data. This may result in interference in data transmission, thereby reducing a transmission gain obtained by the terminal device and reducing data capacity of a cell.

## SUMMARY

An objective of embodiments of this application is to provide a data transmission method and an apparatus, to resolve a problem of how to increase a transmission gain obtained by a terminal device when a serving base station and a cooperative base station jointly transmit data to the terminal device.

According to a first aspect, an embodiment of this application provides a data transmission method, including:

receiving, by a first access network device, a PMI from a terminal device; and sending, by the first access network device, first downlink data to the terminal device, where the first downlink data is data obtained after being precoded with a weighted precoding matrix, the weighted precoding matrix is determined based on the PMI and a preset matrix, the weighted precoding matrix is a 4x2 matrix, and values of the last two elements in a first column and the first two elements in a second column of the weighted precoding matrix are all 0s.

In the foregoing method, in the weighted precoding matrix, the values of the last two elements in the first column are both 0s, and the values of the first two elements in the second column are both 0s. In this manner, the first access network device and a second access network device each have two remote radio unit channels, data sent at a corresponding location in the weighted precoding matrix is 0, and data sent by the first access network device and data sent by the second access network device form two independent data streams, no mutual interference being caused. Correlation between the first downlink data that is sent by the first access network device and that is received by the terminal device and second downlink data that is sent by the second access network device and that is received by the terminal device can be reduced on a receiving side, thereby increasing a data transmission gain.

In an optional implementation, the method further includes:

sending, by the first access network device, the PMI and the preset matrix to a second access network device, where the second access network device is an access network device that collaborates with the first access network device in transmitting data to the terminal device.

In the foregoing method, the PMI and the preset matrix are sent to the second access network device, so that the second access network device collaborates with the first access network device in transmitting data to the terminal device based on the PMI and the preset matrix, and the data sent by the first access network device and the data sent by the second access network device can form two independent data streams, thereby increasing a data transmission gain of the terminal device.

In an optional implementation, before the receiving, by a first access network device, a PMI from a terminal device, the method further includes:

determining, by the first access network device, a pilot signal based on the preset matrix, and sending the pilot signal, where the pilot signal is used to determine the PMI.

In an optional implementation, the method further includes:

when the first access network device and the second access network device transmit downlink data to the terminal device in a coherent joint transmission JT mode, if a first channel quality indicator CQI fed back by the terminal device is less than a first threshold, transmitting, by the first access network device, together with the second access network device, the downlink data to the terminal device in a non-coherent JT mode, where the second access network device is an access network device that collaborates with the first access network device in transmitting data to the terminal device; or when the first access network device and the second access network device transmit downlink data to the terminal device in a non-coherent JT mode, if a second CQI fed back by the terminal device is less than a second threshold, transmitting, by the first access network device, together with the second access network device, the downlink data to the terminal device in a coherent JT mode.

According to the foregoing method, a data transmission mode can be switched adaptively based on channel quality, to enable a terminal device at a cell edge of the first access network device to obtain a larger performance gain.

According to a second aspect, an embodiment of this application provides a communications apparatus. The communications apparatus includes a memory, a communications interface, and a processor, where the memory is configured to store an instruction, and the processor is configured to execute the instruction stored in the memory and control the communications interface to receive and send signals. When executing the instruction stored in the memory, the processor is configured to perform the method in the first aspect or any possible design of the first aspect.

According to a third aspect, an embodiment of this application provides a communications apparatus, configured to implement the method in the first aspect or any possible design of the first aspect. The communications apparatus includes corresponding functional modules, such as a processing unit, a receiving unit, and a sending unit, that are respectively used to implement steps in the foregoing method.

According to a fourth aspect, an embodiment of this application provides a computer-readable storage medium. The computer storage medium stores a computer-readable instruction. When a computer reads and executes the computer-readable instruction, the computer is enabled to perform the method in the first aspect or any possible design of the first aspect.

According to a fifth aspect, an embodiment of this application provides a computer program product. When a computer reads and executes the computer program product, the computer is enabled to perform the method in the first aspect or any possible design of the first aspect.

According to a sixth aspect, an embodiment of this application provides a chip. The chip is connected to a memory, and is configured to read and execute a software program stored in the memory, to implement the method in the first aspect or any possible design of the first aspect.

According to a seventh aspect, an embodiment of this application provides a data transmission method, including:

sending, by a terminal device, a precoding matrix index PMI to a first access network device; and receiving, by the terminal device, first downlink data from the first access network device and second downlink data from a second access network device, where the first downlink data and the second downlink data are data obtained after being precoded with a weighted precoding matrix, the weighted precoding matrix is determined based on the PMI and a preset matrix, the weighted precoding matrix is a 4x2 matrix, and values of the last two elements in a first column and the first two elements in a second column of the weighted precoding matrix are all 0s.

In the foregoing method, in the weighted precoding matrix, the values of the last two elements in the first column are both 0s, and the values of the first two elements in the second column are both 0s. In this manner, the first access network device and a second access network device each have two remote radio unit channels, data sent at a corresponding location in the weighted precoding matrix is 0, and data sent by the first access network device and data sent by the second access network device form two independent data streams, no mutual interference being caused. Correlation between the first downlink data that is sent by the first access network device and that is received by the terminal device and the second downlink data that is sent by the second access network device and that is received by the terminal device can be reduced on a receiving side, thereby increasing a data transmission gain.

In an optional implementation, before the sending, by a terminal device, a precoding matrix index PMI to a first access network device, the method further includes:

receiving, by the terminal device, a pilot signal from the first access network device; and determining, by the terminal device, the PMI based on the pilot signal.

According to an eighth aspect, an embodiment of this application provides a communications apparatus. The communications apparatus includes a memory, a transceiver, and a processor, where the memory is configured to store an instruction, and the processor is configured to execute the instruction stored in the memory and control the transceiver to receive and send signals. When executing the instruction stored in the memory, the processor is configured to perform the method in the seventh aspect or any possible design of the seventh aspect.

According to a ninth aspect, an embodiment of this application provides a communications apparatus, configured to implement the method in the seventh aspect or any possible design of the seventh aspect. The communications apparatus includes corresponding functional modules, such as a receiving unit and a sending unit, that are configured to implement steps in the foregoing method.

According to a tenth aspect, an embodiment of this application provides a computer-readable storage medium. The computer storage medium stores a computer-readable instruction. When a computer reads and executes the computer-readable instruction, the computer is enabled to perform the method in the seventh aspect or any possible design of the seventh aspect.

According to an eleventh aspect, an embodiment of this application provides a computer program product. When a computer reads and executes the computer program product, the computer is enabled to perform the method in the seventh aspect or any possible design of the seventh aspect.

According to a twelfth aspect, an embodiment of this application provides a chip. The chip is connected to a memory, and is configured to read and execute a software program stored in the memory, to implement the method in the seventh aspect or any possible design of the seventh aspect.

According to a thirteenth aspect, an embodiment of this application provides a data transmission method, including:

receiving, by a second access network device, a precoding matrix index PMI and a preset matrix that are from a first access network device, where the second access network device is an access network device that collaborates with the first access network device in transmitting data to a terminal device; and
sending, by the second access network device, second downlink data to the terminal device, where the second downlink data is data obtained after being precoded with a weighted precoding matrix, the weighted precoding matrix is determined based on the PMI and the preset matrix, the weighted precoding matrix is a 4x2 matrix, and values of the last two elements in a first column and the first two elements in a second column of the weighted precoding matrix are all 0s.

In the foregoing method, in the weighted precoding matrix, the values of the last two elements in the first column are both 0s, and the values of the first two elements in the second column are both 0s. In this manner, the first access network device and the second access network device each have two remote radio unit channels, data sent at a corresponding location in the weighted precoding matrix is 0, and data sent by the first access network device and data sent by the second access network device form two independent data streams, no mutual interference being caused. Correlation between the first downlink data that is sent by the first access network device and that is received by the terminal device and the second downlink data that is sent by the second access network device and that is received by the terminal device can be reduced on a receiving side, thereby increasing a data transmission gain.

According to a fourteenth aspect, an embodiment of this application provides a communications apparatus. The communications apparatus includes a memory, a transceiver, and a processor, where the memory is configured to store an instruction, and the processor is configured to execute the instruction stored in the memory and control the transceiver to receive and send signals. When executing the instruction stored in the memory, the processor is configured to perform the method in the thirteenth aspect or any possible design of the thirteenth aspect.

According to a fifteenth aspect, an embodiment of this application provides a communications apparatus, configured to implement the method in the thirteenth aspect or any possible design of the thirteenth aspect. The communications apparatus includes corresponding functional modules, such as a receiving unit and a sending unit, that are configured to implement steps in the foregoing method.

According to a sixteenth aspect, an embodiment of this application provides a computer-readable storage medium. The computer storage medium stores a computer-readable instruction. When a computer reads and executes the computer-readable instruction, the computer is enabled to perform the method in the thirteenth aspect or any possible design of the thirteenth aspect.

According to a seventeenth aspect, an embodiment of this application provides a computer program product. When a computer reads and executes the computer program product, the computer is enabled to perform the method in the thirteenth aspect or any possible design of the thirteenth aspect.

According to an eighteenth aspect, an embodiment of this application provides a chip. The chip is connected to a memory, and is configured to read and execute a software program stored in the memory, to implement the method in the thirteenth aspect or any possible design of the thirteenth aspect.

**BRIEF DESCRIPTION OF DRAWINGS**

FIG. 1 is a schematic architectural diagram of a coordinated multipoint transmission technology applicable to an embodiment of this application;
FIG. 2 is a schematic flowchart of a data transmission method according to an embodiment of this application;
FIG. 3 is a schematic diagram of an application scenario according to an embodiment of this application;
FIG. 4 is a schematic diagram of an application scenario according to an embodiment of this application;
FIG. 5 is a schematic diagram of an application scenario according to an embodiment of this application;
FIG. 6 is a schematic structural diagram of a communications apparatus according to an embodiment of this application;
FIG. 7 is a schematic structural diagram of a communications apparatus according to an embodiment of this application;

FIG. 8 is a schematic structural diagram of a communications apparatus according to an embodiment of this application; and

FIG. 9 is a schematic structural diagram of a communications apparatus according to an embodiment of this application.

## DESCRIPTION OF EMBODIMENTS

The following further describes in detail the embodiments of this application with reference to accompanying drawings.

The embodiments of this application may be applied to various mobile communications systems, such as a new radio (new radio, NR) system, a long term evolution (long term evolution, LTE) system, an advanced long term evolution (advanced long term evolution, LTE-A) system, and an evolved long term evolution (evolved long term evolution, eLTE) system. This is not limited herein.

A terminal device in the embodiments of this application may be a device that has a wireless transceiver function or a chip that can be disposed in any device, or may be referred to as user equipment (user equipment, UE), an access terminal, a subscriber unit, a subscriber station, a mobile station, a mobile console, a remote station, a remote terminal, a mobile device, a user terminal, a wireless communications device, a user agent, a user apparatus, or the like. A terminal device 101 in the embodiments of this application may be a mobile phone (mobile phone), a tablet (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal for transportation safety (transportation safety), a wireless terminal in a smart city (smart city), a wireless terminal in a smart home (smart home), or the like.

An access network device may be an evolved NodeB (evolutional node B, eNB) in an LTE system, or may be a base transceiver station (base transceiver station, BTS) in a global system for mobile communications (global system of mobile communication, GSM) or in a code division multiple access (code division multiple access, CDMA) system, or may be a nodeB (nodeB, NB) in a wideband code division multiple access (wideband code division multiple access, WCDMA) system, or the like.

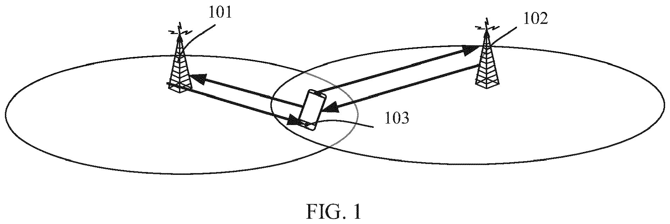

The embodiments of this application may be applied to a coordinated multipoint transmission technology. For example, as shown in FIG. 1, a terminal device 102 accesses a base station 101, and is located at a cell edge of the base station 101. The base station 101 may determine a cell in the base station 102 as a coordinating cell. The base station 101 and the base station 102 may transmit data simultaneously to the terminal device 102 in a coherent joint transmission (joint transmission, JT) mode, or transmit data simultaneously to the terminal device 102 in a non-coherent JT mode. When the base station 101 and the base station 102 transmit data simultaneously to the terminal device 102, data transmitted by the base station 101 and data transmitted by the base station 102 may be the same, or may be different. When the data transmitted by the base station 101 and the data transmitted by the base station 102 are the same, data multiplexing can be implemented, thereby increasing a power gain of the terminal device.

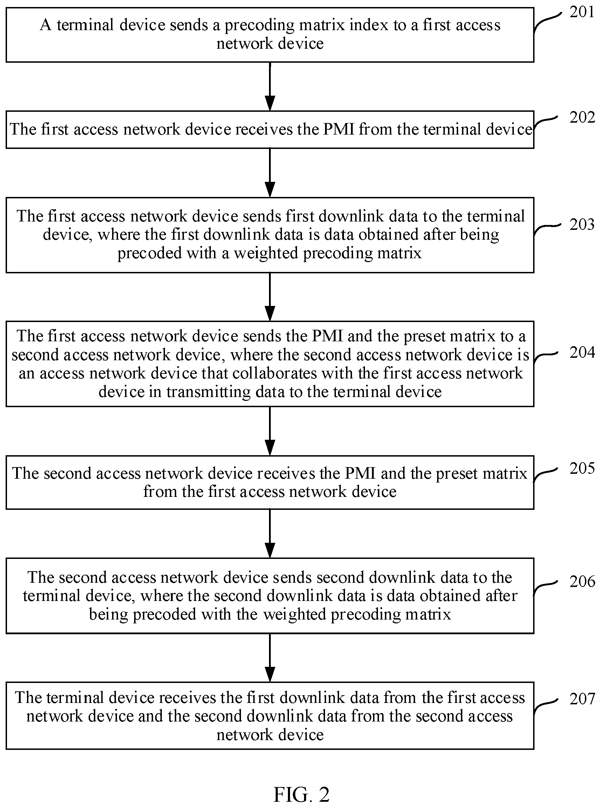

With reference to the foregoing descriptions, FIG. 2 is a schematic flowchart of a data transmission method according to an embodiment of this application. Referring to FIG. 2, the method includes the following steps.

Step 201: A terminal device sends a precoding matrix index to a first access network device.

The precoding matrix index (precoding matrix indicator, PMI) is an index of a precoding matrix in a codebook (codebook), and the precoding matrix corresponding to the PMI may be determined according to the PMI. The codebook includes at least one precoding matrix, the precoding matrix in the codebook may also be referred to as a code word, and the precoding matrix included in the codebook is predefined in a communications protocol.

Before step 201, the first access network device determines a pilot signal based on the preset matrix, and sends the pilot signal. The pilot signal may be used to determine the PMI.

The pilot signal may be a cell-specific reference signal (cell-specific reference signals, CRS), a channel state information-reference signal (channel-state information reference signals, CSI-RS), or the like. This is not limited in this embodiment of this application.

The terminal device performs channel estimation based on the pilot signal sent by the first access network device, and then determines channel state information (channel state information, CSI) based on a result of the channel estimation. The channel state information includes a rank indicator (rank indicator, RI), a PMI, a channel quality indicator (channel quality indicator, CQI), and the like.

It should be noted that how the terminal device specifically determines the CSI based on the result of the channel estimation performed on the pilot signal is not limited in this embodiment of this application. For details, refer to descriptions in an existing communications standard. Details are not described herein again.

In the foregoing solution, the pilot signal is precoded with the preset matrix, so that the terminal device can obtain independent channel feedback of two access network devices (the first access network device and a second access network device) through joint measurement, thereby gaining a more accurate channel feedback precision.

The terminal device sends the determined CSI to the first access network device. The first access network device determines a corresponding precoding matrix based on the received PMI, and performs precoding processing based on the determined precoding matrix, to improve downlink communication quality.

In this embodiment of this application, the pilot signal sent by the first access network device is a signal obtained after being precoded with the preset matrix. For example, if a signal before being precoded is $S_{ref}$, a signal after being precoded is $Q S_{ref}$, where Q is the preset matrix. The preset matrix is described in detail later, and details are not described herein again.

Step 202: The first access network device receives the PMI from the terminal device.

The first access network device may determine, based on the PMI, the precoding matrix corresponding to the PMI.

In this embodiment of this application, the precoding matrix is a 4x2 matrix. For a specific implementation form of the precoding matrix, refer to descriptions in an existing communications standard. Details are not described herein again.

Step 203: The first access network device sends first downlink data to the terminal device, where the first downlink data is data obtained after being precoded with a weighted precoding matrix.

The weighted precoding matrix is determined based on the PMI and the preset matrix, the weighted precoding matrix is a 4x2 matrix, and values of the last two elements in a first column and the first two elements in a second column of the weighted precoding matrix are all 0s.

In step 203, in a first scenario, the first access network device uses a matrix obtained after the preset matrix is multiplied by the precoding matrix corresponding to the PMI as the weighted precoding matrix. In this case, when the precoding matrix is a 4x2 matrix, the preset matrix is a 4x4 matrix, and the weighted precoding matrix is a 4x2 matrix.

Further, in the first scenario, the preset matrix **Q** is any 4x4 matrix that can meet a formula (1):

$$Q \begin{pmatrix} x_1 & y_1 \\ x_2 & y_2 \\ x_3 & y_3 \\ x_4 & y_4 \end{pmatrix} = \begin{pmatrix} \overline{x_1} & 0 \\ \overline{x_2} & 0 \\ 0 & \overline{y_3} \\ 0 & \overline{y_4} \end{pmatrix} \quad \ldots (1)$$

In this formula, $\begin{pmatrix} x_1 & y_1 \\ x_2 & y_2 \\ x_3 & y_3 \\ x_4 & y_4 \end{pmatrix}$ is the precoding matrix corresponding to the PMI, and $\begin{pmatrix} \overline{x_1} & 0 \\ \overline{x_2} & 0 \\ 0 & \overline{y_3} \\ 0 & \overline{y_4} \end{pmatrix}$ is the weighted precoding matrix. A value of each element in the precoding matrix corresponding to the PMI may be determined based on the codebook in the existing communications standard. A value of each element in the weighted precoding matrix is determined as follows: the values of the first two elements in the first column are numbers that are not equal to 0, and the values of the last two elements in the first column are both 0s; the values of the first two elements in the second column are both 0s, and the values of the last two elements in the second column are numbers that are not equal to 0, that is, values of $\overline{x_1}$, $\overline{x_2}$, $\overline{y_3}$, and $\overline{y_4}$ are numbers that are not equal to 0.

In the first scenario, the preset matrix is any 4x4 matrix that can meet the formula (1).

In a second scenario, the first access network device uses a matrix obtained after the precoding matrix corresponding to the PMI is multiplied by the preset matrix as the weighted precoding matrix. In this case, when the precoding matrix is a 4x2 matrix, the preset matrix is a 2x2 matrix, and the weighted precoding matrix is a 4x2 matrix.

Further, in the second scenario, the preset matrix **Q** is any 2x2 matrix that can meet a formula (2):

$$\begin{pmatrix} x_1 & y_1 \\ x_2 & y_2 \\ x_3 & y_3 \\ x_4 & y_4 \end{pmatrix} Q = \begin{pmatrix} \overline{x_1} & 0 \\ \overline{x_2} & 0 \\ 0 & \overline{y_3} \\ 0 & \overline{y_4} \end{pmatrix} \quad \ldots (2)$$

In this formula, $\begin{pmatrix} x_1 & y_1 \\ x_2 & y_2 \\ x_3 & y_3 \\ x_4 & y_4 \end{pmatrix}$ is the precoding

$$\begin{pmatrix} \overline{x_1} & 0 \\ \overline{x_2} & 0 \\ 0 & \overline{y_3} \\ 0 & \overline{y_4} \end{pmatrix}$$

matrix corresponding to the PMI, and is the weighted precoding matrix. A value of each element in the weighted precoding matrix is determined as follows: the values of the first two elements in the first column are numbers that are not equal to 0, and the values of the last two elements in the first column are both 0s; values of the first two elements in the second column are both 0, and values of the last two elements in the second column are numbers that are not equal to 0, that is, values of $\overline{x_1}$, $\overline{x_2}$, $\overline{y_3}$, and $\overline{y_4}$ are numbers that are not equal to 0.

In this embodiment of this application, in a first possible implementation, a preset matrix may be determined for each precoding matrix in the codebook specified in the existing communications standard according to the formula (1) or the formula (2), and an association relationship between each precoding matrix and the preset matrix is established. When receiving the PMI sent by the terminal device, the first access network device may determine the preset matrix based on the PMI.

In a second possible implementation, a preset matrix may be determined. When the preset matrix is a 4x4 matrix, the formula (1) can be established after the preset matrix is multiplied by each precoding matrix in the codebook specified in the existing communications standard. Alternatively, when the preset matrix is a 2x2 matrix, the formula (2) can be established after each precoding matrix in the codebook specified in the existing communications standard is multiplied by the preset matrix.

Step 204: The first access network device sends the PMI and the preset matrix to the second access network device, where the second access network device is an access network device that collaborates with the first access network device in transmitting data to the terminal device.

A method for determining, by the first access network device, the access network device to collaborate in transmitting data for the terminal device is not limited in this embodiment of this application, and details are not described herein again.

Step 205: The second access network device receives the PMI and the preset matrix from the first access network device.

Step 206: The second access network device sends second downlink data to the terminal device, where the second downlink data is data obtained after being precoded with the weighted precoding matrix.

In step 206, for a process of precoding the second downlink data sent by the second access network device, refer to the description in step 203. Details are not described herein again.

Step 207: The terminal device receives the first downlink data from the first access network device and the second downlink data from the second access network device.

In this embodiment of this application, the terminal device receives a signal **Y,** where **Y** is a matrix formed by data sent by the first access network device and the second access network device, and may meet the following formula:

$$Y = HQWS + N \quad ... (3)$$

In this formula, **H** is a channel matrix of a channel between the access network device and the terminal device, **W** is a precoding matrix corresponding to the PMI, **Q** is a preset matrix, **S** is downlink data, and **N** is noise.

In the procedure shown in FIG. 2, in the weighted precoding matrix, the values of the last two elements in the first column are both 0s, and the values of the first two elements in the second column are both 0s. In this manner, the first access network device and the second access network device each have two remote radio unit (remote radio unit, RRU) channels, and data sent at a corresponding location in the weighted precoding matrix is 0, thereby forming two independent streams on the RRUs. Correlation between the first downlink data that is sent by the first access network device and that is received by the terminal device and the second downlink data that is sent by the second access network device and that is received by the terminal device can be reduced on a receiver side, thereby increasing a data transmission gain.

In step 207, the terminal device may further perform channel estimation based on the received first downlink data and the received second downlink data, and determine a corrected CQI, a corrected PMI, and the like based on a channel estimation result. The terminal device may send the corrected CQI and the corrected PMI to the first access network device.

Each cell of the first access network device and the second access network device has two transmit antennas (transmit, T), while the weighted precoding matrix adopts a 4T codebook. Therefore, after data sent by the first access network device and the second access network device is precoded by the precoding matrix, the terminal device determines, based on received signals, a feedback, that is, independent channel feedback of two channels, thereby increasing the accuracy of the channel feedback and obtaining a larger capacity gain.

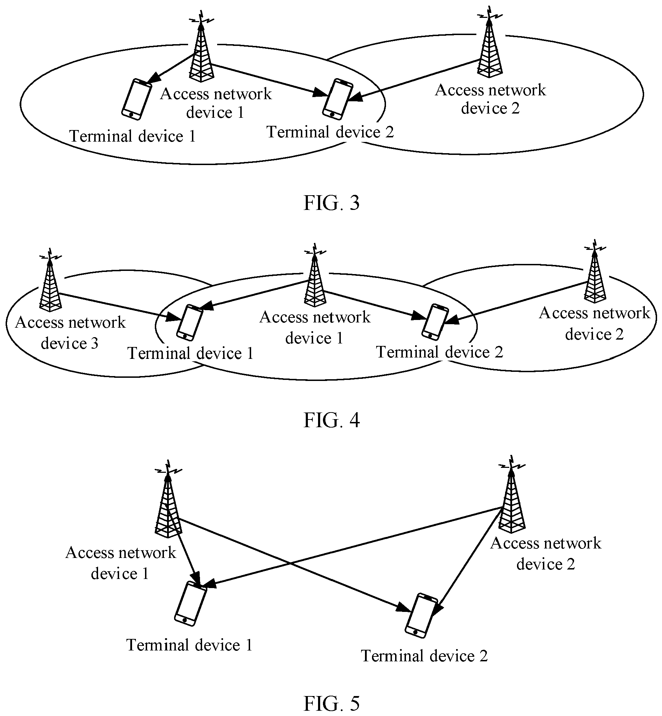

In this embodiment of this application, there may be a plurality of working modes of the first access network device and the second access network device. This is not limited in this embodiment of this application. The following provides descriptions with reference to FIG. 3 to FIG. 5.

FIG. 3 is a schematic diagram of an application scenario according to an embodiment of this application.

In FIG. 3, a terminal device 1 and a terminal device 2 are connected to an access network device 1, and an access network device 2 collaborates with the access network device 1 to transmit data for the terminal device 2. In addition, the access network device 1 independently transmits data for the terminal device 1.

An access network device 3 may also collaborate with the access network device 1 to transmit data for the terminal device 1. Refer to FIG. 4 for details. In FIG. 4, a terminal device 1 and a terminal device 2 are connected to an access network device 1, and an access network device 2 collaborates with the access network device 1 to transmit data for the terminal device 2. In addition, an access network device 3 collaborates with the access network device 1 to transmit data for the terminal device 1.

Further, as shown in FIG. 5, a terminal device 1 is connected to an access network device 1, a terminal device 2 is connected to an access network device 2. The access network device 2 collaborates with the access network device 1 to transmit data for the terminal device 1. In addition, the access network device 1 collaborate with the access network device 2 to transmit data for the terminal device 2.

Certainly, the foregoing description is merely an example, and there may be another manner. Details are not described herein.

In this embodiment of this application, when signals transmitted by two cells are closely correlated, data may be sent in coherent JT mode, to obtain a relatively large gain. When signals from two cells are not closely correlated, data may be sent in non-coherent JT mode to obtain a relatively large performance gain. Therefore, coherent/non-coherent adaptive measurement transmission and single-stream/dual-stream adaptive transmission can be considered.

Specifically, when the first access network device and the second access network device transmit downlink data to the terminal device in the coherent joint transmission JT mode, if a first CQI fed back by the first access network device based on the terminal device is less than a first threshold, the first access network device and the second access network device transmit the downlink data to the terminal device in the non-coherent JT mode, where the second access network device is an access network device that collaborates with the first access network device in transmitting data to the terminal device; or when the first access network device and the second access network device transmit the downlink data to the terminal device in the non-coherent JT mode, if a second CQI fed back by the first access network device based on the terminal device is less than a second threshold, the first access network device and the second access network device transmit the downlink data to the terminal device in the coherent JT mode.

Specific values of the first threshold and the second threshold are not limited in this embodiment of this application, and details are not described herein again.

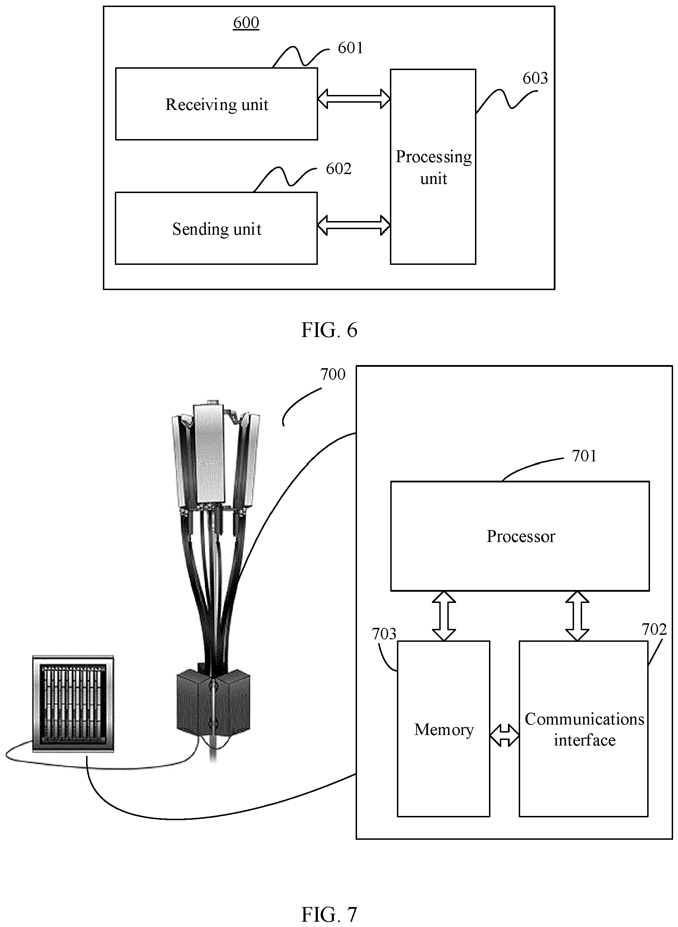

FIG. 6 is a schematic structural diagram of a communications apparatus according to an embodiment of this application. The communications apparatus may be an access network device, and the communications apparatus may be configured to perform actions of the first access network device in the foregoing method embodiments. The communications apparatus 600 includes a receiving unit 601, a sending unit 602, and a processing unit 603, where

the receiving unit 601 is configured to receive a precoding matrix index PMI from a terminal device; and

the sending unit 602 is configured to send first downlink data to the terminal device, where the first downlink data is data obtained after being precoded with a weighted precoding matrix, the weighted precoding matrix is determined based on the PMI and a preset matrix, the weighted precoding matrix is a 4x2 matrix, and values of the last two elements in a first column and the first two elements in a second column of the weighted precoding matrix are all Os.

In an optional implementation, the sending unit 602 is further configured to:

send the PMI and the preset matrix to a second access network device, where the second access network device is an access network device that collaborates with the first access network device in transmitting data to the terminal device.

In an optional implementation, the processing unit 603 is configured to determine a pilot signal based on the preset matrix; and

the sending unit 602 is configured to send the pilot signal, where the pilot signal is used to determine the PMI.

In an optional implementation, the sending unit 602 is further configured to:

when the communications apparatus and the second access network device transmit downlink data to the terminal device in a coherent joint transmission JT mode, if a first channel quality indicator CQI fed back by the terminal device is less than a first threshold, transmit, by the communications apparatus, together with the second access network device, the downlink data to the terminal device in a non-coherent JT mode, where the second access network device is an access network device that collaborates with the first access network device in transmitting data to the terminal device; or when the communications apparatus and the second access network device transmit the downlink data to the terminal device in a non-coherent JT mode, if a second CQI fed back by the terminal device is less than a second threshold, transmit, by the communications apparatus, together with the second access network device, the downlink data to the terminal device in a coherent JT mode.

The communications apparatus shown in FIG. 6 may be configured to perform actions of the second access network device in the foregoing method embodiments. Details are illustrated as follows:

a receiving unit 601 is configured to receive a precoding matrix index PMI and a preset matrix that are from a first access network device, where the second access network device is an access network device that collaborates with the first access network device in transmitting data to a terminal device; and

a sending unit 602 is configured to send second downlink data to the terminal device, where the second downlink data is data obtained after being precoded with a weighted precoding matrix, the weighted precoding matrix is determined based on the PMI and the preset matrix, the weighted precoding matrix is a 4x2 matrix, and values of the last two elements in a first column and the first two elements in a second column of the weighted precoding matrix are all Os.

Referring to FIG. 7, an embodiment of this application further provides a communications apparatus. The communications apparatus may be an access network device, and the communications apparatus may be configured to perform actions of the first access network device in the foregoing method embodiments. The communications apparatus 700 includes a processor 701, a communications interface 702, and a memory 703.

The memory 703 may be configured to store a program instruction, and the processor 701 invokes the program instruction stored in the memory 703 to perform the following operations:

receiving a PMI from a terminal device through the communications interface 702; and sending first downlink data to the terminal device, where the first downlink data is data obtained after being precoded with a weighted precoding matrix, the weighted precoding matrix is determined based on the PMI and a preset matrix, the weighted precoding matrix is a 4x2 matrix, and values of the last two elements in a first column and the first two elements in a second column of the weighted precoding matrix are all Os.

In an optional implementation, the communications interface 702 is further configured to:

send the PMI and the preset matrix to a second access network device, where the second access network device is an access network device that collaborates with the first access network device in transmitting data to the terminal device.

In an optional implementation, the processor 701 is configured to determine a pilot signal based on the preset matrix; and

the communications interface 702 is configured to send the pilot signal, where the pilot signal is used to determine the PMI.

In an optional implementation, the communications interface 702 is further configured to:

when the communications apparatus and the second access network device transmit downlink data to the terminal device in a coherent joint transmission JT mode, if a first channel quality indicator CQI fed back by the terminal device is less than a first threshold, transmit, by the communications apparatus, together with the second access network device, the downlink data to the terminal device in a non-coherent JT mode, where the second access network device is an access network device that collaborates with the first access network device in transmitting data to the terminal device; or when the communications apparatus and the second access network device transmit the downlink data to the terminal device in a non-coherent JT mode, if a second CQI fed back the terminal device is less than a second threshold, transmit, by the communications apparatus, together with the second access network device, the downlink data to the terminal device in a coherent JT mode.

The communications apparatus shown in FIG. 7 may be configured to perform actions of the second access network device in the foregoing method embodiments. Specifically, the processor 701 invokes the program instruction stored in the memory 703, to perform the following operations:

receiving a PMI and a preset matrix that are from the first access network device through the communications interface 702, where the second access network device is an access network device that collaborates with the first access network device in transmitting data to a terminal device; and sending second downlink data to the terminal device, where the second downlink data is data obtained after being precoded with a weighted precoding matrix, the weighted precoding matrix is determined based on the PMI and the preset matrix, the weighted precoding matrix is a 4x2 matrix, and values of the last two elements in a first column and the first two elements in a second column of the weighted precoding matrix are all Os.

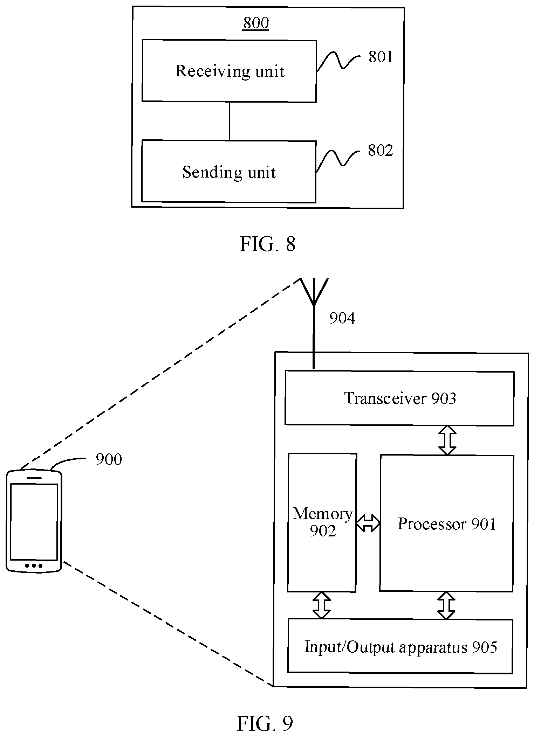

FIG. 8 is a schematic structural diagram of a communications apparatus according to an embodiment of this application. The communications apparatus may be a terminal device, and the communications apparatus may be configured to perform actions of the terminal device in the foregoing method embodiments. The communications apparatus 800 includes a receiving unit 801 and a sending unit 802, where

the sending unit 802 is configured to send a precoding matrix index PMI to a first access network device; and the receiving unit 801 is configured to receive first downlink data from the first access network device and second downlink data from a second access network device, where the first downlink data and the second downlink data are data obtained after being precoded with a weighted precoding matrix, the weighted precoding is determined based on the PMI and a preset matrix, the weighted precoding matrix is a 4x2 matrix, and values of the last two elements in a first column and the first two elements in a second column of the weighted precoding matrix are all Os.

In an optional implementation, before send the precoding matrix index PMI to the first access network device, the receiving unit 801:

receives a pilot signal from the first access network device; and determines the PMI based on the pilot signal.

FIG. 9 is a schematic structural diagram of a communications apparatus according to an embodiment of this application. The communications apparatus shown in FIG. 9 may be an implementation of a hardware circuit of the communications apparatus shown in FIG. 8. The communications apparatus may be configured to perform actions of the terminal device in the foregoing method embodiments. For ease of description, FIG. 9 shows only main components of the communications apparatus. As shown in FIG. 9, the communications apparatus 900 includes a processor 901, a memory 902, a transceiver 903, an antenna 904, and an input/output apparatus 905. The processor 901 is mainly configured to process a communications protocol and communications data, control the communications apparatus, execute a software program, and process data of the software program. For example, the processor 901 is configured to support the communications apparatus in performing the actions described in the foregoing method embodiments. The memory 902 is mainly configured to store a software program and data. The transceiver 903 is mainly configured to perform conversion between a baseband signal and a radio frequency signal, and process the radio frequency signal. The antenna 904 is mainly configured to send and receive a radio frequency signal in a form of an electromagnetic wave. The input/output apparatus 905, such as a touchscreen, a display screen, or a keyboard, is mainly configured to receive data entered by a user and output data to the user.

The memory 902 may be configured to store a program instruction, and the processor 901 invokes the program instruction stored in the memory 902 to perform the following operations:

sending a PMI to a first access network device through the transceiver 903; and receiving first downlink data from the first access network device and second downlink data from a second access network device, where the first downlink data and the second downlink data are data obtained after being precoded with a weighted precoding matrix, the weighted precoding is determined based on the PMI and a preset matrix, the weighted precoding matrix is a 4x2 matrix, and values of the last two elements in a first column and the first two elements in a second column of the weighted precoding matrix are all 0s.

In an optional implementation, before sending the PMI to the first access network device, the transceiver 903 is configured to receive a pilot signal from the first access network device; and

the processor 901 is configured to determine the PMI based on the pilot signal.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

Obviously, a person skilled in the art can make various modifications and variations to this application without departing from the scope of this application. This application is intended to cover these modifications and variations of this application provided that they fall within the scope of the claims of this application and the equivalent technologies thereof.

**Claims**

1. A data transmission method, comprising:

   receiving, by a first access network device, a precoding matrix index PMI from a terminal device; and
   sending, by the first access network device, first downlink data to the terminal device, wherein the first downlink data is data obtained after being precoded with a weighted precoding matrix, the weighted precoding matrix is determined based on the PMI and a preset matrix, the weighted precoding matrix is a 4x2 matrix, and values of the last two elements in a first column and the first two elements in a second column of the weighted precoding matrix are all 0s.

2. The method according to claim 1, wherein the method further comprises:
sending, by the first access network device, the PMI and the preset matrix to a second access network device, wherein the second access network device is an access network device that collaborates with the first access network device in transmitting data to the terminal device.

3. The method according to claim 1, wherein before the receiving, by a first access network device, a precoding matrix index PMI from a terminal device, the method further comprises:
determining, by the first access network device, a pilot signal based on the preset matrix, and sending the pilot signal, wherein the pilot signal is used to determine the PMI.

4. The method according to any one of claims 1 to 3, wherein the method further comprises:

when the first access network device and the second access network device transmit downlink data to the terminal device in a coherent joint transmission JT mode, if a first channel quality indicator CQI fed back by the terminal device is less than a first threshold, transmitting, by the first access network device, together with the second access network device, the downlink data to the terminal device in a non-coherent JT mode, wherein the second access network device is an access network device that collaborates with the first access network device in transmitting data to the terminal device; or
when the first access network device and the second access network device transmit downlink data to the terminal device in a non-coherent JT mode, if a second CQI fed back by the terminal device is less than a second threshold, transmitting, by the first access network device, together with the second access network device, the downlink data to the terminal device in a coherent JT mode.

5. A data transmission method, comprising:

receiving, by a second access network device, a precoding matrix index PMI and a preset matrix that are from a first access network device, wherein the second access network device is an access network device that collaborates with the first access network device in transmitting data to a terminal device; and
sending, by the second access network device, second downlink data to the terminal device, wherein the second downlink data is data obtained after being precoded with a weighted precoding matrix, the weighted precoding matrix is determined based on the PMI and the preset matrix, the weighted precoding matrix is a 4x2 matrix, and values of the last two elements in a first column and the first two elements in a second column of the weighted precoding matrix are all 0s.

6. A data transmission method, comprising:

sending, by a terminal device, a precoding matrix index PMI to a first access network device; and
receiving, by the terminal device, first downlink data from the first access network device and second downlink data from a second access network device, wherein the first downlink data and the second downlink data are data obtained after being precoded with a weighted precoding matrix, the weighted precoding matrix is determined based on the PMI and a preset matrix, the weighted precoding matrix is a 4x2 matrix, and values of the last two elements in a first column and the first two elements in a second column of the weighted precoding matrix are all 0s.

7. The method according to claim 6, wherein before the sending, by a terminal device, a precoding matrix index PMI to a first access network device, the method further comprises:

receiving, by the terminal device, a pilot signal from the first access network device; and
determining, by the terminal device, the PMI based on the pilot signal.

8. A communications apparatus, comprising:

a receiving unit, configured to receive a precoding matrix indicator PMI from a terminal device; and
a sending unit, configured to send first downlink data to the terminal device, wherein the first downlink data is data obtained after being precoded with a weighted precoding matrix, the weighted precoding matrix is determined based on the PMI and a preset matrix, the weighted precoding matrix is a 4x2 matrix, and values of the last two elements in a first column and the first two elements in a second column of the weighted precoding matrix are all Os.

9. The apparatus according to claim 8, wherein the sending unit is further configured to:
send the PMI and the preset matrix to a second access network device, wherein the second access network device is an access network device that collaborates with a first access network device in transmitting data to the terminal device.

**10.** The apparatus according to claim 8, wherein the apparatus further comprises a processing unit, wherein the processing unit is configured to determine a pilot signal based on the preset matrix; and the sending unit is configured to send the pilot signal, wherein the pilot signal is used to determine the PMI.

**11.** The apparatus according to any one of claims 8 to 10, wherein the sending unit is further configured to:

when the communications apparatus and the second access network device transmit downlink data to the terminal device in a coherent joint transmission JT mode, if a first channel quality indicator CQI fed back by the terminal device is less than a first threshold, transmit, by the communications apparatus, together with the second access network device, the downlink data to the terminal device in a non-coherent JT mode, wherein the second access network device is an access network device that collaborates with the first access network device in transmitting data to the terminal device; or

when the communications apparatus and the second access network device transmit the downlink data to the terminal device in a non-coherent JT mode, if a second CQI fed back by the terminal device is less than a second threshold, transmit, by the communications apparatus, together with the second access network device, the downlink data to the terminal device in a coherent JT mode.

**12.** A data transmission apparatus, comprising:

a receiving unit, configured to receive a precoding matrix index PMI and a preset matrix that are from a first access network device, wherein the second access network device is an access network device that collaborates with the first access network device in transmitting data to a terminal device; and

a sending unit, configured to send second downlink data to the terminal device, wherein the second downlink data is data obtained after being precoded with a weighted precoding matrix, the weighted precoding matrix is determined based on the PMI and the preset matrix, the weighted precoding matrix is a 4x2 matrix, and values of the last two elements in a first column and the first two elements in a second column of the weighted precoding matrix are all 0s.

**13.** A data transmission apparatus, comprising:

a sending unit, configured to send a precoding matrix index PMI to a first access network device; and

a receiving unit, configured to receive first downlink data from the first access network device and second downlink data from a second access network device, wherein the first downlink data and the second downlink data are data obtained after being precoded with a weighted precoding matrix, the weighted precoding matrix is determined based on the PMI and a preset matrix, the weighted precoding matrix is a 4x2 matrix, and values of the last two elements in a first column and the first two elements in a second column of the weighted precoding matrix are all 0s.

**14.** The apparatus according to claim 13, wherein before sending the precoding matrix index PMI to the first access network device, the receiving unit is further configured to:
receive a pilot signal from the first access network device; and determine the PMI based on the pilot signal.

**15.** A communications apparatus, comprising a memory and a processor, wherein the memory is configured to store an instruction, the processor is configured to execute the instruction stored in the memory, and when executing the instruction stored in the memory, the processor is configured to perform the data transmission method according to any one of claims 1 to 7.

**16.** A computer-readable storage medium, comprising a computer-readable instruction, wherein when a communications apparatus reads and executes the computer-readable instruction, the communications apparatus is enabled to perform the data transmission method according to any one of claims 1 to 7.

**17.** A computer program product, comprising a computer-readable instruction, wherein when a communications apparatus reads and executes the computer-readable instruction, the communications apparatus is enabled to perform the data transmission method according to any one of claims 1 to 7.

FIG. 1

A terminal device sends a precoding matrix index to a first access network device /~ 201

The first access network device receives the PMI from the terminal device /~ 202

The first access network device sends first downlink data to the terminal device, where the first downlink data is data obtained after being precoded with a weighted precoding matrix /~ 203

The first access network device sends the PMI and the preset matrix to a second access network device, where the second access network device is an access network device that collaborates with the first access network device in transmitting data to the terminal device /~ 204

The second access network device receives the PMI and the preset matrix from the first access network device /~ 205

The second access network device sends second downlink data to the terminal device, where the second downlink data is data obtained after being precoded with the weighted precoding matrix /~ 206

The terminal device receives the first downlink data from the first access network device and the second downlink data from the second access network device /~ 207

FIG. 2

FIG. 3

FIG. 4

FIG. 5

600

601

Receiving unit

602

Sending unit

603

Processing unit

FIG. 6

700

701

Processor

703

702

Memory

Communications interface

FIG. 7

FIG. 8

FIG. 9

## INTERNATIONAL SEARCH REPORT

| | |
|---|---|
| International application No. | |
| | **PCT/CN2018/093177** |

**A. CLASSIFICATION OF SUBJECT MATTER**

H04L 1/06(2006.01)i; H04B 7/04(2017.01)i

According to International Patent Classification (IPC) or to both national classification and IPC

**B. FIELDS SEARCHED**

Minimum documentation searched (classification system followed by classification symbols)

H04L; H04B; H04W

Documentation searched other than minimum documentation to the extent that such documents are included in the fields searched

Electronic data base consulted during the international search (name of data base and, where practicable, search terms used)

CNABS; CNTXT; CNKI; VEN; 3GPP: 多点, 协作, 协同, 基站, 小区, 接入网, 终端, 编码, 矩阵, 索引, 指示, 加权, 独立, 数据, 干扰, multi+, point, coordinat+, CoMP, base station, node B, cell, access network, terminal, encod+, matrix, index, indicat+, PMI, independent, data, interference

**C. DOCUMENTS CONSIDERED TO BE RELEVANT**

| Category* | Citation of document, with indication, where appropriate, of the relevant passages | Relevant to claim No. |
|---|---|---|
| A | WO 2010075640 A1 (ALCATEL-LUCENT SHANGHAI BELL CO., LTD. ET AL.) 08 July 2010 (2010-07-08) entire document | 1-17 |
| A | CN 102195915 A (ALCATEL-LUCENT SHANGHAI BELL CO., LTD.) 21 September 2011 (2011-09-21) entire document | 1-17 |
| A | CN 103580795 A (ZTE CORPORATION) 12 February 2014 (2014-02-12) entire document | 1-17 |
| A | WO 2012093742 A1 (PANTECH CO LTD ET AL.) 12 July 2012 (2012-07-12) entire document | 1-17 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **26 March 2019** | **02 April 2019** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

# EP 3 799 338 A1

**INTERNATIONAL SEARCH REPORT**
Information on patent family members

International application No.

**PCT/CN2018/093177**

| Patent document cited in search report | | | Publication date (day/month/year) | Patent family member(s) | | | Publication date (day/month/year) |
|---|---|---|---|---|---|---|---|
| WO | 2010075640 | A1 | 08 July 2010 | EP | 2372925 | A4 | 05 March 2014 |
| | | | | CN | 102204113 | B | 14 August 2013 |
| | | | | EP | 2372925 | A1 | 05 October 2011 |
| | | | | US | 2011255625 | A1 | 20 October 2011 |
| | | | | CN | 102204113 | A | 28 September 2011 |
| | | | | KR | 20110100313 | A | 09 September 2011 |
| | | | | JP | 5529888 | B2 | 25 June 2014 |
| | | | | JP | 2012514395 | A | 21 June 2012 |
| CN | 102195915 | A | 21 September 2011 | CN | 102195915 | B | 22 January 2014 |
| CN | 103580795 | A | 12 February 2014 | CN | 103580795 | B | 07 November 2017 |
| WO | 2012093742 | A1 | 12 July 2012 | KR | 20140005899 | A | 15 January 2014 |
| | | | | US | 2013272206 | A1 | 17 October 2013 |

Form PCT/ISA/210 (patent family annex) (January 2015)